# EUROPÄISCHE PATENTSCHRIFT

(11) **EP 2 577 122 B1**
(45) Veröffentlichungstag und Bekanntmachung des Hinweises auf die Patenterteilung: **25.09.2013**
(21) Anmeldenummer: 12728403.2
(22) Anmeldetag: 20.06.2012
(51) Int. Cl.: F16K 11/20, F15B 13/08

(54) **MEHRWEGEVENTIL UND VERFAHREN ZU DESSEN BETREIBEN**
MULTIPLE WAY VALVE AND METHOD OF ACTUATING
SOUPAPE À VOIES MULTIPLES ET MÉTHODE POUR L'ACTIONNER

(30) Priorität: 26.07.2011 DE 102011108522
(43) Veröffentlichungstag der Anmeldung: 10.04.2013
(73) Patentinhaber: FESTO AG & Co. KG, 73734 Esslingen (DE)
(72) Erfinder: BOGDANOWICZ, Grzegorz, 73760 Ostfildern (DE); BRENNER, Jakob, 73734 Esslingen (DE)
(74) Vertreter: Abel, Martin
(86) Internationale Anmeldenummer: PCT/EP2012/002584
(87) Internationale Veröffentlichungsnummer: WO 2013/013743

(56) Entgegenhaltungen:
- DE-A1- 3 828 860
- US-A- 4 924 902

## Beschreibung

Die Erfindung betrifft ein Mehrwegeventil, mit zwei jeweils ein bewegliches Ventilglied aufweisenden Ventileinheiten, die ein gemeinsames Ventilgehäuse mit einer die beiden Ventilglieder in axialer Aufeinanderfolge gemeinsam aufnehmenden und zwei einander entgegengesetzte äußere Endabschnitte aufweisenden Aufnahmebohrung enthalten, wobei jedes Ventilglied durch axiale Umschaltbewegungen wahlweise in einer einem der äußeren Endabschnitte der Aufnahmebohrung zugeordneten äußeren Schaltstellung oder in einer diesbezüglich axial weiter innen in der Aufnahmebohrung liegenden inneren Schaltstellung positionierbar ist, wobei jedes Ventilglied in seinen beiden Schaltstellungen bezüglich des Ventilgehäuses in einer axialen Richtung unbeweglich abgestützt ist und wobei die beiden Ventilglieder längenmäßig derart aufeinander abgestimmt sind, dass die innere Schaltstellung jedes Ventilgliedes durch direkte Abstützung an dem seine äußere Schaltstellung einnehmenden anderen Ventilglied vorgegeben ist.

Die Erfindung betrifft ferner ein Verfahren zum Betreiben eines Mehrwegeventils, das über zwei jeweils ein bewegliches Ventilglied aufweisende Ventileinheiten verfügt, die ein gemeinsames Ventilgehäuse mit einer die beiden Ventilglieder in axialer Aufeinanderfolge gemeinsam aufnehmenden und zwei einander entgegengesetzte äußere Endabschnitte aufweisenden Aufnahmebohrung enthalten, wobei jedes Ventilglied durch axiale Umschaltbewegungen wahlweise in einer einem der äußeren Endabschnitte der Aufnahmebohrung zugeordneten äußeren Schaltstellung oder in einer diesbezüglich axial weiter innen in der Aufnahmebohrung liegenden inneren Schaltstellung positionierbar ist, wobei jedes Ventilglied in seinen beiden Schaltstellungen bezüglich des Ventilgehäuses in einer axialen Richtung unbeweglich abgestützt ist.

Ein aus der EP 0 887 559 B1 bekanntes Mehrwegeventil enthält zwei zu einer Baueinheit zusammengefasste Ventileinheiten, die über ein gemeinsames Ventilgehäuse verfügen und die jeweils ein axial bewegliches Ventilglied enthalten, wobei beide Ventilglieder axial aufeinanderfolgend in ein und derselben Aufnahmebohrung des gemeinsamen Ventilgehäuses angeordnet sind. Die beiden Ventileinheiten haben jeweils die Funktion eines 3/2-Wegeventils, wobei ihre Ventilglieder unabhängig voneinander wahlweise in einer äußeren Schaltstellung oder in einer inneren Schaltstellung positionierbar sind. Beide Schaltstellungen jedes Ventilgliedes sind dadurch definiert, dass sich das betreffende Ventilglied ohne Kontakt mit dem anderen Ventilglied in einer axialen Richtung unbeweglich bezüglich des Ventilgehäuses abstützt.

Das bekannte Mehrwegeventil ist derart betreibbar, dass die beiden Ventilglieder in einer ersten Betriebsstellung des Mehrwegeventils gleichzeitig ihre äußeren Schaltstellungen einnehmen. Ebenso besteht unter anderem die Möglichkeit, eine Betriebsstellung einzustellen, in der beide Ventilglieder zur gleichen Zeit ihre innere Schaltstellung einnehmen. Für manche Anwendungen ist eine solche Betriebsstellung jedoch nicht erwünscht, weil damit sich widersprechende Kanalverbindungen freigeschaltet werden. Daher sind in solchen Fällen an die Ansteuerungsmaßnahmen hohe Sicherheitsanforderungen zu stellen, um ein versehentliches gleichzeitiges Umschalten beider Ventilglieder in die innere Schaltstellung zu vermeiden.

Aus der EP 2 061 982 B1 ist eine mit einer elektrisch betätigbaren Ventileinrichtung ausgestattete Vakuumerzeugervorrichtung bekannt, die einen luftsparenden Betrieb ermöglicht, ohne bei einem Stromausfall das Abfallen eines zuvor angesaugten Gegenstandes zu riskieren. Die Ventileinrichtung ist als Mehrwegeventil mit einem einzigen Ventilglied konzipiert.

Aus der DE 38 28 860 A1 ist ein Mehrwegeventil bekannt, das gemäß Oberbegriff des Anspruches 1 ausgebildet ist und gemäß Oberbegriff des Anspruches 12 betrieben werden kann. Zur Betätigung jeder Ventileinheit ist eine elektromagnetische Antriebsvorrichtung vorhanden. Auch die US 4 924 902 A beschreibt ein solches Mehrwegeventil, wobei hier allerdings zur Betätigung zwei Magnetventile vorhanden sind.

Der Erfindung liegt die Aufgabe zugrunde, ein Mehrwegeventil und ein zum Betreiben eines solchen Mehrwegeventils geeignetes Verfahren mit hoher Betriebssicherheit und bei Bedarf kurzen Umschaltzeiten zu schaffen.

Zur Lösung dieser Aufgabe ist bei einem Mehrwegeventil der eingangs genannten Art vorgesehen, dass das Mehrwegeventil von elektro-fluidisch vorgesteuerter Bauart ist und mit elektrisch betätigbaren Vorsteuermitteln ausgestattet ist, die eine dem Hervorrufen der Umschaltbewegungen dienende gesteuerte Fluidbeaufschlagung jedes Ventilgliedes mit einem Antriebsfluid ermöglichen, wobei die Vorsteuermittel über zwei jeweils einer der beiden Ventileinheiten zugeordnete und als 3/2-Wegeventile ausgebildete, elektrisch betätigbare Vorsteuerventile verfügen und wobei die beiden Ventilglieder als Ventilgliedeinheit gemeinsam zwischen zwei Betriebsstellungen umschaltbar sind, in denen das jeweils eine Ventilglied seine äußere Schaltstellung und das jeweils andere Ventilglied seine innere Schaltstellung einnimmt, wobei das momentan aus seiner äußeren Schaltstellung in seine innere Schaltstellung umschaltende Ventilglied ein das andere Ventilglied vor sich herschiebendes und schiebend antreibendes Schubglied bildet.

Bei einem Verfahren der eingangs genannten Art wird die genannte Aufgabe dadurch gelöst, dass die beiden Ventilglieder als Ventilgliedeinheit gemeinsam zwischen zwei Betriebsstellungen umgeschaltet werden, in denen das jeweils eine Ventilglied seine äußere Schaltstellung und gleichzeitig das jeweils andere Ventilglied seine innere Schaltstellung einnimmt, wobei das momentan aus seiner äußeren Schaltstellung in seine innere Schaltstellung umschaltende Ventilglied als das andere Ventilglied vor sich herschiebendes und schiebend antreibendes Schubglied genutzt wird und wobei die Umschaltbewegungen der Ventilglieder mittels elektrisch betätigbaren Vorsteuermitteln durch gesteuerte Fluidbeaufschlagung mit einem Antriebsfluid hervorgerufen werden.

Auf diese Weise lässt sich mit geringem Aufwand ein hoher Sicherheitsstandard realisieren. Beide Ventilglieder haben zwei klar definierte Schaltstellungen, in denen sie jeweils bezüglich des Ventilgehäuses in einer axialen Richtung unbeweglich abgestützt sind. Eine Besonderheit dieser Abstützung besteht jedoch darin, dass die innere Schaltstellung der Ventilglieder nicht durch direktes Abstützen bezüglich des Ventilgehäuses vorgegeben wird, sondern durch diesbezüglich indirektes Abstützen unter Zwischenschaltung des jeweils anderen Ventilgliedes, das sich in der äußeren Schaltstellung befindet. Mit anderen Worten fungiert jedes Ventilglied bei Einnahme seiner äußeren Schaltstellung als Abstützglied oder Anschlagglied zur Vorgabe der inneren Schaltstellung des jeweils anderen Ventilgliedes. Mit dieser Maßnahme ist verbunden, dass allein schon aus konstruktiven Gründen niemals beide Ventilglieder zur gleichen Zeit ihre innere Schaltstellung einnehmen können. Auf diese Weise kann ein hoher Sicherheitsstandard ohne aufwendige elektronische Überwachungsmaßnahmen implementiert werden. Nebenbei erspart man sich zur Vorgabe der inneren Schaltstellungen separate, gehäuseseitige Anschläge.

Als vorteilhaft wird die vorgesteuerte Bauform des Mehrwegeventils angesehen, bei der es mit elektrisch betätigbaren Vorsteuermitteln ausgestattet ist, die es ermöglichen, jedes Ventilglied gesteuert mit einem Antriebsfluid zu beaufschlagen, um die gewünschten Umschaltbewegungen beziehungsweise das gewünschte Positionieren der Ventilglieder hervorzurufen. Die gesteuerte Fluidbeaufschlagung besteht in der Regel darin, dass das betroffene Ventilglied entweder mit einem Antriebsfluid beaufschlagt wird oder eine Druckentlastung vorgenommen wird. Das Antriebsfluid ist insbesondere Druckluft. Die Vorsteuermittel enthalten zwei elektrisch betätigbare Vorsteuerventile, die zu jeweils einer der beiden Ventileinheiten gehören.

Das Mehrwegeventil eröffnet insbesondere eine Betriebsweise, bei der jedes Ventilglied zwischen seiner äußeren und seiner inneren Schaltstellung umschaltbar ist, wenn das andere Ventilglied konstant seine äußere Schaltstellung einnimmt. Das umschaltende Ventilglied stützt sich dabei in der äußeren Schaltstellung an einer ständig ortsfest bezüglich des Ventilgehäuses angeordneten Anschlagfläche ab, während es sich in der inneren Schaltstellung an dem anderen, momentan die äußere Schaltstellung einnehmenden und sich seinerseits an einer bezüglich des Ventilgehäuses ständig ortsfesten Anschlagfläche des Ventilgliedes abstützt. Bei entsprechender Ansteuerung der beiden Ventilglieder lässt sich das Mehrwegeventil bei Bedarf auch in einer Art und Weise betreiben, bei der die beiden Ventilglieder als Ventilgliedeinheit gemeinsam zwischen zwei Betriebsstellungen umschaltbar sind, in denen das jeweils eine Ventilglied seine äußere Schaltstellung und das jeweils andere Ventilglied gleichzeitig seine innere Schaltstellung einnimmt.

Der konstruktive Aufbau des Mehrwegeventils schafft die Voraussetzungen, um das Mehrwegeventil bei Bedarf mit dem erfindungsgemäßen Verfahren zu betreiben. Diese Betriebsweise sieht vor, dass die beiden Ventilglieder einheitlich gemeinsam als lose aneinander anliegende Ventilgliedeinheit zwischen zwei Betriebsstellungen umschaltbar sind, in denen das jeweils eine Ventilglied die äußere Schaltstellung und zugleich das jeweils andere Ventilglied die innere Schaltstellung einnimmt. Indem hier auf das momentan noch in der äußeren Schaltstellung befindliche Ventilglied eine Betätigungskraft ausgeübt wird, kann es eine Schubkraft auf das an ihm anliegende und in der inneren Schaltstellung befindliche andere Ventilglied ausüben und dieses vor sich herschieben. Wie sich gezeigt hat, lassen sich auf diese Weise besonders kurze Umschaltzeiten realisieren, die insbesondere kürzer sind, als wenn man jedes Ventilglied unabhängig vom anderen Ventilglied gesondert umschalten würde.

Vorteilhafte Weiterbildungen der Erfindung gehen aus den aus den Unteransprüchen hervor.

Ein zweckmäßiger Aufbau des Mehrwegeventils sieht vor, dass die beiden Ventilglieder zumindest während des Betriebes des Mehrwegeventils durch zwischen ihnen wirksame Federmittel ständig in Richtung ihrer äußeren Schaltstellungen vorgespannt sind, wobei jedes Ventilglied dadurch aus seiner äußeren Schaltstellung in seine innere Schaltstellung umschaltbar ist, dass durch Aufbringung einer Antriebskraft die entgegengesetzt wirkende Federkraft der Federmittel überwunden wird. Durch derartige Federmittel lässt sich sehr einfach eine als Grundstellung dienende Betriebsstellung der beiden Ventilglieder realisieren, die sich dadurch auszeichnet, dass beide Ventilglieder zur gleichen Zeit ihre äußere Schaltstellung einnehmen und in dieser äußeren Schaltstellung durch die Federmittel stabilisiert sind. Indem die Federmittel unmittelbar zwischen den beiden Ventilgliedern wirksam sind, beeinträchtigen sie nicht ein eventuell gewünschtes gleichzeitiges Umschalten der beiden Ventilglieder, wenn diese sich aneinander abstützen.

Es wäre prinzipiell möglich, die Federmittel in Gestalt einer mechanischen Federeinrichtung auszubilden. Als vorteilhafter wird jedoch eine Realisierung in Form einer reibungsfrei arbeitenden Luftfeder angesehen, die von Druckluft gebildet wird, welche die beiden Ventilglieder gleichzeitig in axial voneinander weg gerichteter Weise beaufschlagt. Eine solche Luftfeder besteht insbesondere aus in einer Luftfederkammer befindlicher Druckluft, die gleichzeitig in einander entgegengesetzten Richtungen auf in die Luftfederkammer hineinragende innere Endabschnitte der beiden Ventilglieder einwirkt, wobei die Luftfederkammer von einen Längenabschnitt der Aufnahmebohrung des Ventilgehäuses gebildet ist.

Die Längenabmessungen der Ventilglieder sind insbesondere so gewählt, dass das eine Ventilglied bei Einnahme seiner äußeren Schaltstellung weniger weit axial in die Luftfederkammer hineinragt, als dies beim anderen Ventilglied der Fall ist, wenn dieses seinerseits die äußere Schaltstellung einnimmt. Vorzugsweise ist in dem Ventilgehäuse ein der Einspeisung von Druckluft dienender Speisekanal ausgebildet, der in die Luftfederkammer einmündet und für die Bereitstellung der Luftfeder sorgt. Unabhängig davon, welche Schaltstellung jedes Ventilglied im deaktivierten, drucklosen Zustand des Mehrwegeventils einnimmt, kann durch ein Aktivieren der Luftfeder durch mittels des Speisekanals erfolgende Einspeisung von Druckluft dafür gesorgt werden, dass zum Betriebsbeginn des Mehrwegeventils beide Ventilglieder zur Vorgabe einer Grundstellung des Mehrwegeventils in ihre äußere Schaltstellung verlagert werden.

Jedes Ventilglied verfügt zweckmäßigerweise über eine Antriebsfläche, die in axialer Richtung vom anderen Ventilglied wegweist und die zur gesteuerten Beaufschlagung mittels eines Antriebsfluides nutzbar ist. Mithin ist also insbesondere jedes Ventilglied derart mit einer solchen Antriebsfläche ausgestattet, dass die Antriebsflächen einander entgegengesetzt in der axialen Richtung der Aufnahmebohrung orientiert sind.

Die Vorsteuerventile sind zweckmäßigerweise lösbar an das gemeinsame Ventilgehäuse der beiden Ventileinheiten angebaut.

Um gegenseitig ihre Anschlagfunktion optimal erfüllen zu können, verfügen die beiden Ventilglieder zweckmäßigerweise an ihren einander zugewandten Endabschnitten über jeweils eine dem anderen Ventilglied zugewandte Abstützfläche. Diese Abstützfläche ist insbesondere stirnseitig am jeweiligen Ventilglied angeordnet. Nimmt eines der Ventilglieder seine innere Schaltstellung ein, stützt es sich mit seiner Abstützfläche an der zugewandten Abstützfläche des sich in der äußeren Schaltstellung befindenden anderen Ventilgliedes ab.

Die beiden Ventilglieder stützen sich mit ihren Abstützflächen insbesondere auch dann aneinander ab, wenn sie ausgehend von einer Betriebsstellung, in der das eine Ventilglied die äußere Schaltstellung und das andere Ventilglied die innere Schaltstellung einnimmt, als Ventilgliedeinheit gemeinsam in eine andere Betriebsstellung umgeschaltet werden, in der ihre Schaltstellungen vertauscht sind. Das bei einer solchen einheitlichen Umschaltbewegung nacheilende Ventilglied übt dabei mit seiner Abstützfläche eine Schubkraft auf die Abstützfläche des voreilenden Ventilgliedes aus.

Jede Ventileinheit ist zweckmäßigerweise so ausgebildet, dass sie über eine 2/2-Ventilfunktionalität verfügt. Jedes Ventilglied ist dabei in der Lage, zwei in die Aufnahmekammer einmündende Ventilkanäle wahlweise miteinander zu verbinden oder voneinander abzutrennen. Beide Ventileinheiten gemeinsam betrachtet, eröffnet das Mehrwegeventil die vorteilhafte Möglichkeit zum Einsatz nach Art eines 3/3-Mehrwegeventils. Je nach Position der Ventilglieder sind hierbei drei Betriebsstellungen definierbar, wobei in einer Betriebsstellung beide Ventilglieder ihre äußere Schaltstellung einnehmen und in den beiden anderen Betriebsstellungen das jeweils eine Ventilglied seine äußere Schaltstellung und zugleich das andere Ventilglied seine innere Schaltstellung einnimmt.

Das Mehrwegeventil ist besonders vorteilhaft als Steuerventil einer Vakuum-Spannvorrichtung nutzbar, mit der sich unterdruckbedingt Gegenstände zeitweilig festhalten lassen. Eine der beiden Ventileinheiten ist hierbei nutzbar, um einen beiden Ventileinheiten gemeinsam zugeordneten Ventilanschluss wahlweise mit einer Unterdruckquelle zu verbinden oder von dieser Unterdruckquelle abzutrennen. Die andere Ventileinheit ist nutzbar, um den besagten Ventilanschluss wahlweise mit einer Überdruckquelle zu verbinden oder von dieser Überdruckquelle abzutrennen. Aufgrund der integrierten Sicherheitsfunktion, basierend auf einem Verhindern einer gleichzeitigen Einnahme der inneren Schaltstellung beider Ventilglieder, kann hierbei mit geringem Aufwand verhindert werden, dass der Ventilanschluss gleichzeitig mit der Unterdruckquelle und mit der Überdruckquelle verbunden wird.

Nachfolgend wird die Erfindung anhand der beiliegenden Zeichnung näher erläutert. In dieser zeigen:
- Figur 1: eine bevorzugte erste Ausführungsform des erfindungsgemäßen Mehrwegeventils in einem Längsschnitt und mit stirnseitig angebauten, ungeschnitten abgebildeten Vorsteuerventilen, wobei beide Ventilglieder ihre äußere Schaltstellung einnehmen,
- Figur 2: das Mehrwegeventil aus Figur 1 ohne Darstellung der Vorsteuerventile in einer Betriebsstellung, in der das eine Ventilglied die äußere Schaltstellung und das andere Ventilglied die innere Schaltstellung einnimmt, und
- Figur 3: in einer der Figur 2 entsprechenden Darstellungsweise eine bezüglich Figur 2 entgegengesetzte weitere Betriebsstellung der Ventilglieder, in der die Schaltstellung der Ventilglieder bezüglich Figur 2 gerade vertauscht ist.

Das in seiner Gesamtheit mit Bezugsziffer 1 bezeichnete Mehrwegeventil vereinigt in sich zwei Ventileinheiten 2a, 2b, die im Folgenden auch als erste und zweite Ventileinheiten 2a, 2b bezeichnet werden. Die beiden Ventileinheiten 2a, 2b sind zu einer das Mehrwegeventil 1 bildenden Baueinheit zusammengefasst.

Die beiden Ventileinheiten 2a, 2b zeichnen sich durch ein gemeinsames Ventilgehäuse 3 aus. Selbiges enthält exemplarisch einen länglichen Gehäusehauptkörper 4 und zwei auf einander entgegengesetzten Stirnseiten an dem Gehäusehauptkörper 4 angebrachte Gehäusedeckel 5, 6.

Das Ventilgehäuse 3 und insbesondere dessen Gehäusedeckel 5, 6 sind zweckmäßigerweise von Befestigungsbohrungen 7 durchsetzt, unter deren Mitwirkung sich das Mehrwegeventil 1 bei Bedarf an einer nicht näher dargestellten Tragstruktur befestigen lässt.

Das Mehrwegeventil 1 ist zweckmäßigerweise von elektro-fluidisch vorgesteuerter Bauart. In diesem Zusammenhang ist es mit elektrisch betätigbaren Vorsteuermitteln 8 ausgestattet. Bevorzugt enthalten die Vorsteuermittel 8 zwei elektrisch betätigbare Vorsteuerventile, die im Folgenden auch als erstes und zweites Vorsteuerventil 12a, 12b bezeichnet werden. Das erste Vorsteuerventil 12a gehört zur ersten Ventileinheit 2a, das zweite Vorsteuerventil 12b ist Bestandteil der zweiten Ventileinheit 2b.

Zweckmäßigerweise ist an den beiden einander axial entgegengesetzten Stirnflächen des Ventilgehäuses 3 jeweils eines der beiden Vorsteuerventile 12a, 12b in bevorzugt lösbarer Weise angebaut.

Bei den Vorsteuerventilen 12a, 12b handelt es sich insbesondere um Magnetventile. Denkbar wäre beispielsweise auch eine Ausgestaltung als Piezoventile. Jedenfalls verfügen sie jeweils über elektrische Anschlussmittel 13, an denen die für ihren Betrieb erforderlichen elektrischen Betätigungssignale eingespeist werden können.

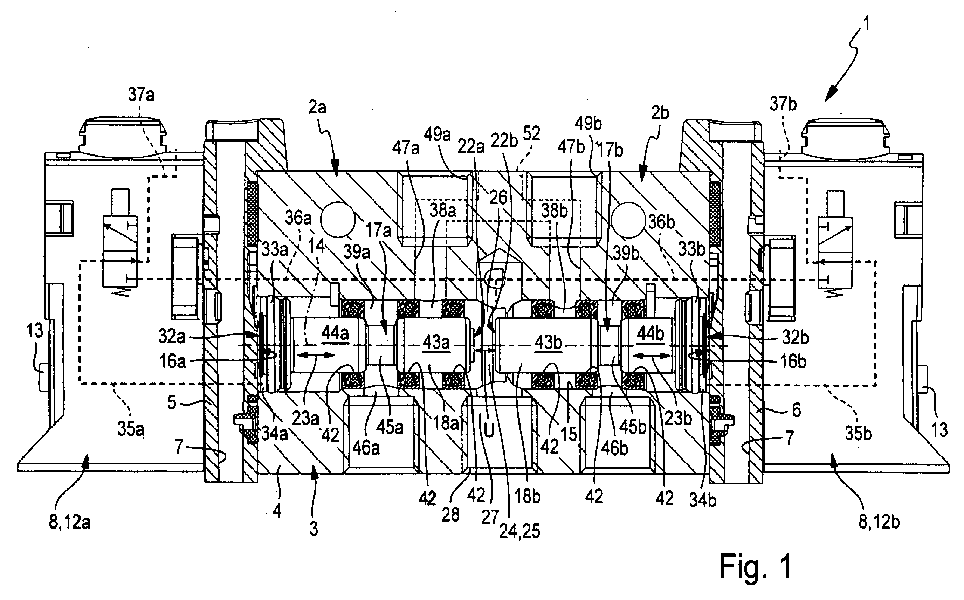

Die Vorsteuerventile 12a, 12b sind insbesondere als 3/2-Wegeventile ausgebildet. Ein entsprechendes Schaltsymbol ist in Figur 1 jeweils eingezeichnet.

Im Innern des Ventilgehäuses 3 ist eine eine Längsachse 14 aufweisende, sich insbesondere in der Längsrichtung des Ventilgehäuses 3 erstreckende Aufnahmebohrung 15 ausgebildet. Die Aufnahmebohrung 15 durchsetzt zweckmäßigerweise den Gehäusehauptkörper 4 und ist an ihren beiden Stirnseiten durch jeweils einen der Gehäusedeckel 5, 6 abgeschlossen. Jede der beiden die Aufnahmebohrung 15 stirnseitig begrenzenden Abschlusswände, die exemplarisch von den Gehäusedeckeln 5, 6 gebildet sind, definiert eine axial in Richtung der Aufnahmebohrung 15 orientierte Anschlagfläche 16a, 16b. Diese beiden einander zugewandten Anschlagflächen seien im Folgenden auch als erste und zweite Anschlagfläche 16a, 16b bezeichnet.

Abweichend vom Ausführungsbeispiel könnte zur Definition mindestens einer der beiden Anschlagflächen 16a, 16b auch eine andere, unabhängig vom Betriebszustand des Mehrwegeventils 1 ständig ortsfest bezüglich des Ventilgehäuses 3 angeordnete Ventilkomponente vorhanden sein. Beispielsweise könnte jede Anschlagfläche 16a, 16b von einem ständig ortsfest an dem Gehäusehauptkörper 4 befestigten separaten Anschlagkörper definiert sein.

Die erste Anschlagfläche 16a gehört zur ersten Ventileinheit 2a, die zweite Anschlagfläche 16b ist Bestandteil der zweiten Ventileinheit 2b.

Im Innern der spanabhebend oder auch durch Urformung hergestellten Aufnahmebohrung 15 sind, in axialer Aufeinanderfolge, zwei im Folgenden als erste und zweite Ventilglieder 17a, 17b bezeichnete und gesondert voneinander ausgebildete Ventilglieder angeordnet. Die beiden Ventilglieder 17a, 17b sind insbesondere koaxial zueinander angeordnet, wobei ihre Längsachsen mit der Längsachse 14 der Aufnahmebohrung 15 zusammenfallen. Die Aufnahmebohrung 15 ist zwischen den beiden Ventilgliedern 17a, 17b ununterbrochen durchgängig und weist insbesondere keine Trennwand zwischen den beiden Ventilgliedern 17a, 17b auf. Dadurch ist es den beiden Ventilgliedern 17a, 17b möglich, gegenseitig in der axialen Richtung der Aufnahmebohrung 15 in Kontakt miteinander zu treten und sich in der axialen Richtung aneinander abzustützen. Zum Zwecke dieses Abstützens weist das erste Ventilglied 17a an seinem dem zweiten Ventilglied 17b zugewandten inneren Endabschnitt 18a eine dem zweiten Ventilglied 17b zugewandte erste Abstützfläche 22a auf und das zweite Ventilglied 17b besitzt an seinem dem ersten Ventilglied 17a zugewandten inneren Endabschnitt 18b eine dem ersten Ventilglied 17a axial zugewandte zweite Abstützfläche 22b.

Vorzugsweise sind die beiden Abstützflächen 22a, 22b stirnseitig am jeweiligen inneren Endabschnitt 18a, 18b des betreffenden Ventilgliedes 17a, 17b angeordnet oder ausgebildet.

Jedes Ventilglied 17a, 17b ist in der Aufnahmebohrung 15 in deren Längsrichtung verschiebbar angeordnet. Somit kann jedes Ventilglied 17a, 17b zu durch Doppelpfeilen angedeuteten axialen Umschaltbewegungen 23a, 23b relativ zum Ventilgehäuse 3 angetrieben werden. Im Rahmen dieser Umschaltbewegungen 23a, 23b kann jedes Ventilglied 17a, 17b wahlweise in einer äußeren Schaltstellung oder in einer inneren Schaltstellung innerhalb der Aufnahmebohrung 15 positioniert werden.. In der äußeren Schaltstellung ist das jeweils betroffene Ventilglied 17a, 17b in Richtung des zugeordneten äußeren Endabschnittes der Aufnahmebohrung 15 verlagert, der sich an eine der Anschlagflächen 16a, 16b anschließt. In der inneren Schaltstellung nimmt das Ventilglied 17a, 17b eine axial weiter innen in der Aufnahmebohrung 15 liegende Position ein.

Genauer gesagt ist die äußere Schaltstellung des ersten Ventilgliedes 17a durch Anlage des ersten Ventilgliedes 17a an der ihm zugewandten ersten Anschlagfläche 16a definiert. In vergleichbarer Weise ist die äußere Schaltstellung des zweiten Ventilgliedes 17b durch dessen Anlage an der ihm zugewandten zweiten Anschlagfläche 16b definiert. Durch Anlage an einer Anschlagfläche 16a, 16b ist das betreffende Ventilglied 17a, 17b bezüglich des Ventilgehäuses 3 in einer axialen Richtung, nämlich nach axial außen hin, unbeweglich abgestützt.

In der inneren Schaltstellung ist jedes Ventilglied 17a, 17b in der entgegengesetzten axialen Richtung wie in seiner äußeren Schaltstellung axial unbeweglich bezüglich des Ventilgehäuses 3 abgestützt. Diese Abstützung wird allerdings nicht durch eine unabhängig vom Betriebszustand des Mehrwegeventils 1 ortsfest bezüglich des Ventilgehäuses 3 angeordnete Komponente bewirkt, sondern durch das jeweils andere, sich momentan in der äußeren Schaltstellung befindende und hierbei von einer Anschlagfläche 16a, 16b abgestützte Ventilglied 17b, 17a. Jedes Ventilglied 17a, 17b bildet also bei Einnahme seiner äußeren Schaltstellung ein Anschlagglied oder Abstützglied zur Vorgabe der inneren Schaltstellung des jeweils anderen Ventilgliedes 17b, 17a.

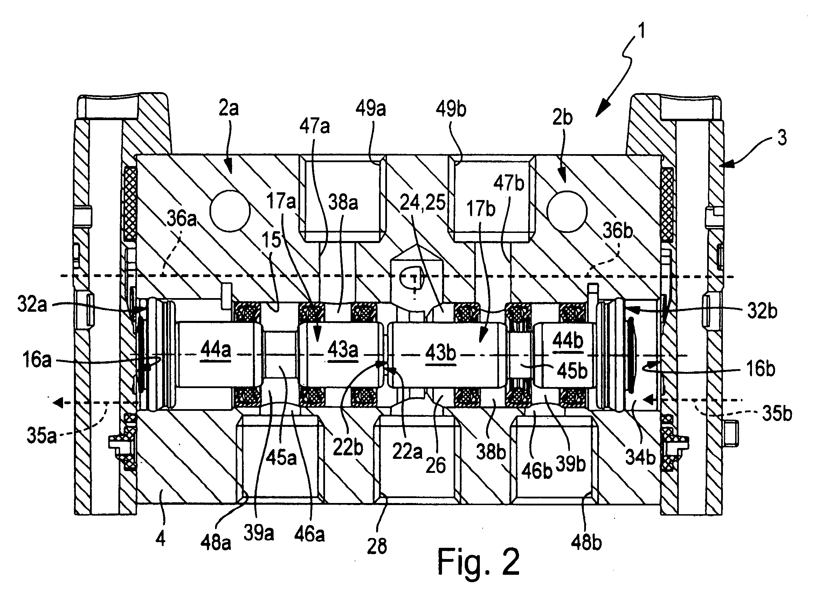

Wenn beide Ventilglieder 17a, 17b ihre äußere Schaltstellung einnehmen, wie dies in Figur 1 illustriert ist, definiert dies eine erste Betriebsstellung der beiden Ventilglieder 17a, 17b bzw. des Mehrwegeventils 1. Hierbei stützt sich das erste Ventilglied 17a an der ersten Anschlagfläche 16a ab und das zweite Ventilglied 17b stützt sich an der zweiten Anschlagfläche 16b ab. Zwischen den beiden Ventilgliedern 17a, 17b befindet sich ein als Umschaltabstand "U" bezeichenbarer axialer Abstand, der gleichbedeutend ist mit dem axialen Abstand zwischen den einander zugewandten ersten und zweiten Abstützflächen 22a, 22b. Ausgehend von dieser ersten Betriebsstellung gemäß Figur 1 können die beiden Ventilglieder 17a, 17b in einer aus Figur 2 ersichtlichen zweiten Betriebsstellung positioniert werden. In dieser zweiten Betriebsstellung nimmt das erste Ventilglied 17a weiterhin unverändert seine äußere Schaltstellung ein, während das zweite Ventilglied 17b in Richtung zum ersten Ventilglied 17a verlagert ist, bis es mit seiner zweiten Abstützfläche 22b an der ersten Abstützfläche 22a des ersten Ventilgliedes 17a zur Anlage gelangt und an einer Weiterbewegung gehindert ist. Diese Position des zweiten Ventilgliedes 17b ist seine innere Schaltstellung. Selbige wird also durch das in der äußeren Schaltstellung gehäusefest abgestützte Ventilglied 17a definiert. In dieser inneren Schaltstellung ist das zweite Ventilglied 17b von der ihm zugeordneten gehäuseseitigen zweiten Anschlagfläche 16b abgehoben.

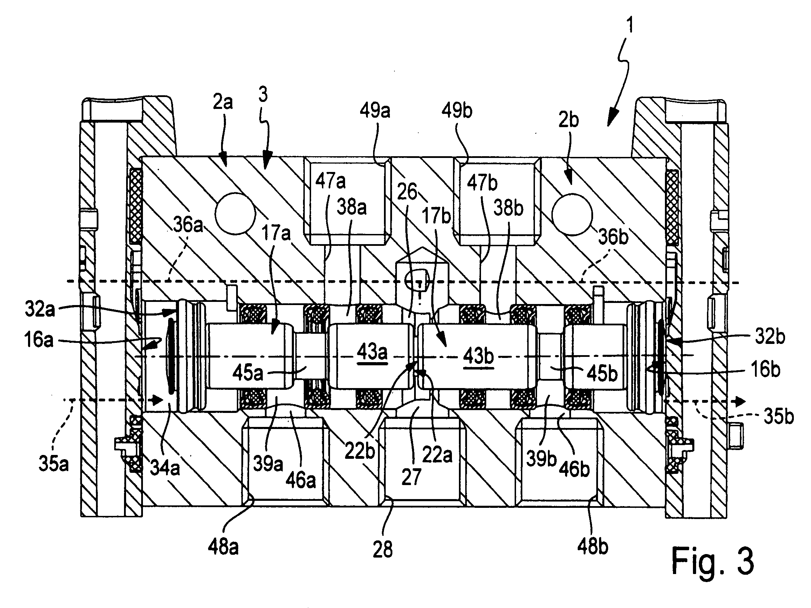

Ausgehend von der ersten Betriebsstellung gemäß Figur 1 können die Ventilglieder 17a, 17b auch in der aus Figur 3 ersichtlichen Betriebsstellung positioniert werden. Diese zeichnet sich dadurch aus, dass das zweite Ventilglied 17b unverändert eine an der zweiten Anschlagfläche 16b abgestützte äußere Schaltstellung einnimmt, während das erste Ventilglied 17a von der ihm zugeordneten ersten Anschlagfläche 16a abgehoben ist und so weit axial in Richtung zum zweiten Ventilglied 17b bewegt ist, bis es mit seiner ersten Abstützfläche 22a an der zugewandten zweiten Abstützfläche 22b des zweiten Ventilgliedes 17b anliegt. Durch diese gegenseitige Anlage der beiden Abstützflächen 22a, 22b bei gleichzeitig in der äußeren Schaltstellung befindlichem zweitem Ventilglied 17b ist die innere Schaltstellung des ersten Ventilgliedes 17a definiert.

Die Umschaltstrecke jedes Ventilgliedes 17a, 17b zwischen seiner äußeren und seiner inneren Schaltstellung entspricht dem Umschaltabstand "U". Die beiden Ventilglieder 17a, 17b sind also längenmäßig derart aufeinander abgestimmt, dass ihre inneren Schaltstellungen jeweils durch direkte Abstützung an dem gleichzeitig seine äußere Schaltstellung einnehmenden jeweils anderen Ventilglied vorgegeben ist.

Die Umschaltbewegungen 23a, 23b können mittels der Vorsteuermittel 8 durch individuell gesteuerte Fluidbeaufschlagung der beiden Ventilglieder 17a, 17b hervorgerufen werden. Zur gesteuerten Fluidbeaufschlagung wird ein Antriebsfluid verwendet, bei dem es sich vorzugsweise um Druckluft handelt.

Bevor weiter auf die fluidische Ansteuerung der Ventilglieder 17a, 17b eingegangen wird, sei noch erwähnt, dass das Mehrwegeventil 1 vorteilhafterweise mit Federmitteln 24 ausgestattet ist, die zumindest während des Betriebes des Mehrwegeventils 1 zweckmäßigerweise ständig unmittelbar zwischen den beiden Ventilgliedern 17a, 17b wirksam sind und diese beiden Ventilglieder 17a, 17b voneinander weg gerichtet in Richtung ihrer äußeren Schaltstellungen vorspannen.

Diese Federmittel 24 bestehen zweckmäßigerweise aus einer reibungsfrei arbeitenden Luftfeder 25. Die Luftfeder 25 wiederum ist gebildet von Druckluft, die sich in einer Luftfederkammer 26 des Ventilgehäuses 3 befindet und die beiden Ventilglieder 17a, 17b in einander entgegengesetzte axiale Richtungen beaufschlagt.

Bei der Luftfederkammer 26 handelt es sich insbesondere um einen Längenabschnitt der Aufnahmebohrung 15, in den die beiden Ventilglieder 17a, 17b mit ihren frei endenden inneren Endabschnitten 18a, 18b unabhängig von der momentan eingenommenen Schaltstellung hineinragen. In Abhängigkeit von der Schaltstellung der Ventilglieder 17a, 17b verändert sich lediglich das Maß des Hineinragens in die Luftfederkammer 26.

Die zur Bildung der Luftfeder 25 benötigte Druckluft wird exemplarisch durch einen Speisekanal 27 hindurch bereitgestellt, der im Ventilgehäuse 3 verläuft und einenends in die Luftfederkammer 26 einmündet. Andernends verfügt er über einen zu einer Außenfläche des Ventilgehäuses 3 ausmündenden Speiseanschluss 28, der in nicht weiter abgebildeter Weise, beispielsweise mittels einer wegführenden Fluidleitung, mit einer Druckluftquelle verbunden oder verbindbar ist. Bedingt durch die beschriebene Ausgestaltung werden die beiden Ventilglieder 17a, 17b ständig an ihren einander zugewandten und im Innern der Luftfederkammer 26 liegenden Stirnflächen von der die Luftfeder 25 bildenden Druckluft voneinander weg gerichtet beaufschlagt.

Ein wesentlicher Vorteil einer Luftfeder 25 gegenüber einer prinzipiell auch möglichen mechanischen Feder ist der reibungsfreie und verschleißfreie Betrieb.

Jedes Ventilglied 17a, 17b ist aus seiner äußeren Schaltstellung, in der es durch die Luftfeder 25 normalerweise festgehalten wird, durch Beaufschlagung mittels eines Antriebsfluides in die innere Schaltstellung verfahrbar. Beim Ausführungsbeispiel kommt Druckluft als Antriebsfluid zur Anwendung.

Zur Beaufschlagung mit dem Antriebsfluid ist jedes Ventilglied 17a, 17b mit einer axial entgegengesetzt zu der am gleichen Ventilglied 17a, 17b angeordneten Abstützfläche 22a, 22b orientierten Antriebsfläche 32a, 32b ausgestattet. Zur besseren Unterscheidung sei im Folgenden die Antriebsfläche 32a des ersten Ventilgliedes 17a auch als erste Antriebsfläche 32a bezeichnet und wird die am zweiten Ventilglied 17b angeordnete Antriebsfläche auch als zweite Antriebsfläche 32b bezeichnet.

Zweckmäßigerweise befinden sich die Antriebsflächen 32a, 32b an der vom jeweils anderen Ventilglied 17b, 17a axial abgewandten Stirnfläche des betreffenden Ventilgliedes 17a, 17b. Die Antriebsfläche 32a, 32b ist vorzugsweise größer als die in die Luftfeder 25 hineinragende Stirnfläche des zugeordneten Ventilgliedes 17a, 17b.

Zweckmäßigerweise verfügt jedes Ventilglied 17a, 17b an seinem dem äußeren Endabschnitt der Aufnahmebohrung 15 zugeordneten Endbereich über einen fest angebrachten oder auch nur lose anliegenden Antriebskolben 33a, 33b, an dem die zugeordnete Antriebsfläche 32a, 32b ausgebildet ist.

Bei Einnahme seiner äußeren Schaltstellung stützt sich das Ventilglied 17a, 17b zweckmäßigerweise mit seiner Antriebsfläche 32a, 32b an der gegenüberliegenden Anschlagfläche 16a, 16b ab.

Jede Antriebsfläche 32a, 32b begrenzt eine Antriebskammer 34a, 34b, die sich axial zwischen der Antriebsfläche 32a, 32b und der dieser axial gegenüberliegenden stirnseitigen Abschlusswand der Aufnahmebohrung 15 erstreckt.

Mit jeder dieser beiden Antriebskammern 34a, 34b ist einer von zwei Vorsteuer-Arbeitskanälen 35a, 35b fluidisch verbunden, die jeweils andererseits mit einem der beiden Vorsteuerventile 12a, 12b kommunizieren. Jedes Vorsteuerventil 12a, 12b steht außerdem über einen Vorsteuer-Speisekanal 36a, 36b mit einer das Antriebsfluid liefernden Druckquelle in Verbindung und kommuniziert außerdem über einen Vorsteuer-Entlastungskanal 37a, 37b mit der Atmosphäre. Exemplarisch sind die Vorsteuer-Entlastungskanäle 37a, 37b als Entlüftungskanäle konzipiert.

Vorzugsweise wird als Druckquelle für das Antriebsfluid eine Druckluftquelle und hierbei zweckmäßigerweise die gleiche Druckluftquelle verwendet, die auch die Druckluft für die Luftfeder 25 liefert. Dies ist beim Ausführungsbeispiel sehr einfach dadurch realisiert, dass das Antriebsfluid für beide Ventilglieder 17a, 17b aus der im Betrieb des Mehrwegeventils 1 mit einer externen Druckluftquelle kommunizierenden Luftfederkammer 26 abgezweigt wird. Mit anderen Worten stehen die beiden Vorsteuer-Speisekanäle 36a, 36b fluidisch mit der Luftfederkammer 26 in ständiger Verbindung.

Um die erste Betriebsstellung gemäß Figur 1 zu erhalten, werden die beiden Vorsteuerventile 12a, 12b in die aus der Zeichnung ersichtliche Entlastungsstellung geschaltet. Hier sind beide Antriebskammern 34a, 34b drucklos, weil jeder Vorsteuer-Arbeitskanal 35a, 35b mit dem zugeordneten Vorsteuer-Entlastungskanal 37a, 37b verbunden und der Vorsteuer-Speisekanal 36a, 36b abgetrennt ist.

Zum Erhalt der zweiten Betriebsstellung gemäß Figur 2 wird das erste Vorsteuerventil 12a in der Entlastungsstellung belassen und das zweite Vorsteuerventil 12b in eine Arbeitsstellung umgeschaltet. In der Arbeitsstellung ist der dem zweiten Vorsteuerventil 12b zugeordnete Vorsteuer-Speisekanal 36b mit dem Vorsteuer-Arbeitskanal 35b des zweiten Vorsteuerventils 12b verbunden, wobei der zugeordnete Vorsteuer-Entlastungskanal 37b abgetrennt ist. Auf diese Weise wird die zweite Antriebsfläche 32b von dem aus der Luftfederkammer 26 abgezweigten Antriebsfluid beaufschlagt. Da diese zweite Antriebsfläche 32b größer ist als die der Luftfeder 25 ausgesetzte entgegengesetzte Stirnfläche des gleichen zweiten Ventilgliedes 17b, ergibt sich ein Kraftüberschuss in der Richtung der inneren Schaltstellung, so dass das zweite Ventilglied 17b unter Überwindung der rückstellend wirkenden Federkraft der Federmittel 24 beziehungsweise der Luftfeder 25 in die innere Schaltstellung gemäß Figur 2 umschaltet.

In vergleichbarer Weise ergibt sich aus der ersten Betriebsstellung gemäß Figur 1 die dritte Betriebsstellung gemäß Figur 3, wenn das zweite Vorsteuerventil 12b in der Entlastungsstellung belassen wird und das erste Vorsteuerventil 12a in seine Arbeitsstellung umgeschaltet wird. In diesem Fall bewegt sich das erste Ventilglied 17a aufgrund der die Federkraft überwindenden fluidischen Antriebskraft in seine innere Schaltstellung.

Mithin kann bei dem Mehrwegeventil des Ausführungsbeispiels jedes Ventilglied 17a, 17b wahlweise in seiner äußeren oder in seiner inneren Schaltstellung positioniert werden, während das jeweils andere Ventilglied 17b, 17a dabei konstant seine äußere Schaltstellung einnimmt.

Es besteht die Möglichkeit, beliebig oft zwischen der ersten Betriebsstellung gemäß Figur 1 und der zweiten Betriebsstellung gemäß Figur 2 umzuschalten, ohne zwischenzeitlich die dritte Betriebsstellung gemäß Figur 3 hervorzurufen. Ebenso kann beliebig oft ein Stellungswechsel zwischen der ersten Betriebsstellung gemäß Figur 1 und der dritten Betriebsstellung gemäß Figur 3 stattfinden, ohne zwischenzeitlich in die zweite Betriebsstellung gemäß Figur 2 zu schalten.

Es ist aber auch möglich, ausgehend von der ersten Betriebsstellung gemäß Figur 1, zunächst in die zweite oder dritte Betriebsstellung zu schalten, anschließend wieder in die erste Betriebsstellung zurückzuschalten und anschließend in die zuvor nicht eingenommene dritte beziehungsweise zweite Betriebsstellung umzuschalten.

Die beiden Ventilglieder 17a, 17b sind längenmäßig insbesondere derart aufeinander abgestimmt, dass das zweite Ventilglied 17b bei Einnahme seiner äußeren Schaltstellung axial weiter in die Luftfederkammer 26 hineinragt, als dies bei dem ebenfalls die äußere Schaltstellung einnehmenden ersten Ventilglied 17a der Fall ist.

Ein Vorteil des beispielhaften Mehrwegeventils 1 besteht darin, dass die beiden Ventilglieder 17a, 17b auch als Ventilgliedeinheit gemeinsam direkt zwischen der zweiten Betriebsstellung und der dritten Betriebsstellung umschaltbar sind, ohne zwischenzeitlich die erste Betriebsstellung einzunehmen.

Ausgehend von der zweiten Betriebsstellung ist hierzu lediglich durch entsprechende Ansteuerung seitens der Vorsteuermittel 8 die zweite Antriebsfläche 32b vom Antriebsdruck zu entlasten und gleichzeitig die erste Antriebsfläche 32a dem Antriebsfluid auszusetzen. Als Resultat wird das erste Ventilglied 17a durch das auf es einwirkende Antriebsfluid in Richtung seiner inneren Schaltstellung verlagert, wobei es das vom Antriebsfluid entlastete zweite Ventilglied 17b schiebend antreibt und vor sich herschiebt, bis dieses zweite Ventilglied 17b an der zweiten Anschlagfläche 16b zur Anlage kommt und dadurch seine äußere Schaltstellung einnimmt. Man kann hier sagen, dass das angetriebene erste Ventilglied 17a als Schubglied wirkt.

Die gleichen Gegebenheiten sind erzielbar, wenn ausgehend von der dritten Betriebsstellung gemäß Figur 3 die erste Antriebsfläche 32a vom Antriebsfluid entlastet und gleichzeitig die zweite Antriebsfläche 32b des zweiten Ventilgliedes 17b durch das Antriebsfluid beaufschlagt wird. Es schalten dann beide Ventilglieder 17a, 17b gemeinsam mit gleicher Geschwindigkeit als Ventilgliedeinheit aus der dritten Betriebsstellung in die zweite Betriebsstellung um.

Es ist sehr vorteilhaft, wenn das Mehrwegeventil 1 in dieser eben geschilderten Weise betrieben wird, weil sich dadurch besonders hohe Umschaltgeschwindigkeiten realisieren lassen.

Funktionell sind die beiden Ventileinheiten 2a, 2b zweckmäßigerweise mit einer 2/2-Ventilfunktionalität ausgestattet. Um dies zu realisieren, ist beim Ausführungsbeispiel die Aufnahmebohrung 15 axial zu beiden Seiten der Luftfederkammer 26 in jeweils zwei axial aufeinanderfolgend angeordnete innere und äußere Steuerkammern 38a, 39a; 38b, 39b unterteilt, von denen die eine Steuerkammerpaarung 38a, 39a zur ersten Ventileinheit 2a und die zweite Steuerkammerpaarung 38b, 39b zur zweiten Ventileinheit 2b gehört. Zwischen jeweils benachbarten Kammern 38a, 39a, 26, 38b, 39b befindet sich jeweils eine das zugeordnete Ventilglied 17a, 17b konzentrisch umschließende und ortsfest bezüglich des Ventilgehäuses 3 angeordnete, nach radial innen weisende ringförmige Dichtfläche 42, die beispielsweise an einem in der Aufnahmebohrung 15 befestigten Dichtungsring ausgebildet ist. Die beiden äußeren Steuerkammern 39a, 39b sind an ihrer axialen Außenseite ebenfalls von einer solchen ringförmigen Dichtfläche 42 flankiert.

Mithin befinden sich axial beidseits der Luftfederkammer 26 jeweils drei axial beabstandet zueinander angeordnete ringförmige Dichtflächen 42, die jeweils vom Ventilglied 17a, 17b der betreffenden Ventileinheit 2a, 2b gleitverschieblich durchsetzt sind. Jedes Ventilglied 17a, 17b ist vorzugsweise nach Art eines Ventilschiebers ausgebildet und besitzt zwei axial beabstandete Steuerabschnitte 43a, 44a, zwischen denen sich ein bezüglich den Steuerabschnitten 43a, 44a im Querschnitt reduzierter Längenabschnitt erstreckt, der im Folgenden als Überströmabschnitt 45a, 45b bezeichnet sei.

Die Steuerabschnitte 43a,b; 44a,b verfügen über eine derartige Länge, dass unabhängig von der Schaltstellung des zugeordneten Ventilgliedes 17a, 17b ein Steuerabschnitt 43a, 44a ständig unter Abdichtung von der sich unmittelbar an die Luftfederkammer 26 anschließenden Dichtfläche 42 umschlossen ist, während der andere Steuerabschnitt 43b, 44b ständig von der axial ganz außen angeordneten ringförmigen Dichtfläche 42 unter Abdichtung umschlossen ist.

Des Weiteren sind die Ventilglieder 17a,b und die Dichtflächen 42 derart aufeinander abgestimmt angeordnet, dass der der Luftkammer 26 benachbarte innere Steuerabschnitt 43a, 43b bei Einnahme der äußeren Schaltstellung auch von der zwischen der inneren Steuerkammer 38a, 38b und der äußeren Steuerkammer 39a, 39b angeordneten Dichtfläche 42 unter Abdichtung umschlossen ist, so dass sich der Überströmabschnitt 45a, 45b ausschließlich in der jeweils äußeren Steuerkammer 39a, 39b befindet.

Nimmt ein Ventilglied 17a, 17b die innere Schaltstellung ein, ist dessen axial innerer Steuerabschnitt 43a, 43b aus der zwischen den beiden benachbarten Steuerkammern 38a, 39a; 38b, 39b angeordneten Dichtfläche 42 herausgefahren, so dass der Überströmabschnitt 45a, 45b im Bereich dieser Dichtfläche 42 zu liegen kommt und, da sein Durchmesser geringer ist als derjenige der Dichtfläche 42, eine fluidische Verbindung zwischen der jeweils inneren Steuerkammer 38a, 38b und der dieser benachbarten äußeren Steuerkammer 39a, 39b herstellt.

Jede Ventileinheit 2a, 2b hat einen mit der äußeren Steuerkammer 39a, 39b kommunizierenden ersten Ventilkanal 46a, 46b und einen mit der inneren Steuerkammer 38a, 38b kommunizierenden zweiten Ventilkanal 47a, 47b. Jeder dieser vier Ventilkanäle kommuniziert beim Ausführungsbeispiel mit einem individuellen, außen am Ventilgehäuse 3 ausmündenden Ventilanschluss 48a, 49a; 48b, 49b.

Somit ist in der äußeren Schaltstellung jedes Ventilgliedes 17a, 17b die Verbindung zwischen den zur gleichen Ventileinheit 2a, 2b gehörenden Ventilanschlüssen 48a, 49a; 48b, 49b unterbrochen, während diese Verbindung in der inneren Schaltstellung des Ventilgliedes 17a, 17b freigegeben ist.

In einer bevorzugten Anwendung des Mehrwegeventils 1 ist an den Ventilanschluss 48a des ersten Ventilkanals 46a der ersten Ventileinheit 2a eine Überdruckquelle angeschlossen, während an den Ventilanschluss 48b des ersten Ventilkanals 46b der zweiten Ventileinheit 2b eine Unterdruckquelle angeschlossen ist. Die Unterdruckquelle ist beispielsweise eine Vakuumpumpe oder eine Ejektoreinrichtung. Gleichzeitig sind die Ventilanschlüsse 49a, 49b der beiden zweiten Ventilkanäle 47a, 47b gemeinsam mit einem nicht weiter abgebildeten Sauggreifer verbunden, der dazu dient, einen nur festzuhaltenden oder auch zu transportierenden Gegenstand mittels Unterdruck zu ergreifen und zu fixieren.

Somit besteht die Möglichkeit, unter Ausnutzung der drei möglichen Betriebsstellungen der Ventilglieder 17a, 17b den angeschlossenen Sauggreifer entweder sowohl von der Überdruckquelle als auch von der Unterdruckquelle abzutrennen (erste Betriebsstellung) oder den Sauggreifer entweder zu Zwecken eines Ansaugens eines Gegenstandes zu evakuieren (dritte Betriebsstellung) oder zu Zwecken eines Ablegens eines zuvor angesaugten Gegenstandes mit Überdruck zu beaufschlagen (zweite Betriebsstellung).

In einem solchen Zusammenhang ist das Mehrwegeventil 1 folglich mit einer 3/3-Ventilfunktionalität betreibbar, wobei die beiden zu den zweiten Ventilkanälen 47a, 47b gehörenden Ventilanschlüsse 49a, 49b aufgrund ihres Zusammenschlusses funktionell wie ein einziger Ventilanschluss betrachtet werden.

Anstatt diese beiden Ventilanschlüsse 49a, 49b außerhalb des Mehrwegeventils 1 zusammenzuschließen, besteht auch die Möglichkeit, die beiden zweiten Ventilkanäle 47a, 47b bereits innerhalb des Ventilgehäuses 3 zu einem gemeinsamen Ventilanschluss 52 zu führen, wie dies in Figur 1 gepunktet angedeutet ist.

## Patentansprüche

1. Mehrwegeventil, mit zwei jeweils ein bewegliches Ventilglied (17a, 17b) aufweisenden Ventileinheiten (2a, 2b), die ein gemeinsames Ventilgehäuse (3) mit einer die beiden Ventilglieder (17a, 17b) in axialer Aufeinanderfolge gemeinsam aufnehmenden und zwei einander entgegengesetzte äußere Endabschnitte aufweisenden Aufnahmebohrung (15) enthalten, wobei jedes Ventilglied (17a, 17b) durch axiale Umschaltbewegungen (23a, 23b) wahlweise in einer einem der äußeren Endabschnitte der Aufnahmebohrung (15) zugeordneten äußeren Schaltstellung oder in einer diesbezüglich axial weiter innen in der Aufnahmebohrung (15) liegenden inneren Schaltstellung positionierbar ist, wobei jedes Ventilglied (17a, 17b) in seinen beiden Schaltstellungen bezüglich des Ventilgehäuses (3) in einer axialen Richtung unbeweglich abgestützt ist und wobei die beiden Ventilglieder (17a, 17b) längenmäßig derart aufeinander abgestimmt sind, dass die innere Schaltstellung jedes Ventilgliedes (17a, 17b) durch direkte Abstützung an dem seine äußere Schaltstellung einnehmenden anderen Ventilglied (17b, 17a) vorgegeben ist, **dadurch gekennzeichnet, dass** das Mehrwegeventil (1) von elektro-fluidisch vorgesteuerter Bauart ist und mit elektrisch betätigbaren Vorsteuermitteln (8) ausgestattet ist, die eine dem Hervorrufen der Umschaltbewegungen (23a, 23b) dienende gesteuerte Fluidbeaufschlagung jedes Ventilgliedes (17a, 17b) mit einem Antriebsfluid ermöglichen, wobei die Vorsteuermittel (8) über zwei jeweils einer der beiden Ventileinheiten (2a, 2b) zugeordnete und als 3/2-Wegeventile ausgebildete, elektrisch betätigbare Vorsteuerventile (12a, 12b) verfügen und wobei die beiden Ventilglieder (17a, 17b) als Ventilgliedeinheit gemeinsam zwischen zwei Betriebsstellungen umschaltbar sind, in denen das jeweils eine Ventilglied (17a, 17b) seine äußere Schaltstellung und das jeweils andere Ventilglied (17b, 17a) seine innere Schaltstellung einnimmt, wobei das momentan aus seiner äußeren Schaltstellung in seine innere Schaltstellung umschaltende Ventilglied (17a, 17b) ein das andere Ventilglied (17b, 17a) vor sich herschiebendes und schiebend antreibendes Schubglied bildet.

2. Mehrwegeventil nach Anspruch 1, **dadurch gekennzeichnet, dass** die beiden Ventilglieder (17a, 17b) zumindest während des Betriebes des Mehrwegeventils durch zwischen ihnen wirksame Federmittel (24) ständig in Richtung ihrer äußeren Schaltstellungen vorgespannt sind und jedes Ventilglied (17a, 17b) ausgehend von seiner äußeren Schaltstellung unter Überwindung der Federkraft der Federmittel (24) in die innere Schaltstellung umschaltbar ist.

3. Mehrwegeventil nach Anspruch 2, **dadurch gekennzeichnet, dass** die Federmittel (24) in Gestalt einer Luftfeder (25) realisiert sind, die aus die beiden Ventilglieder (17a, 17b) axial voneinander weg gerichtet beaufschlagender Druckluft besteht.

4. Mehrwegeventil nach Anspruch 3, **dadurch gekennzeichnet, dass** die beiden Ventilglieder (17a, 17b) über einander zugewandte innere Endabschnitte (18a, 18b) verfügen, die beide unabhängig von der Schaltstellung des zugeordneten Ventilgliedes (17a, 17b) in eine von einem Abschnitt der Aufnahmebohrung (15) gebildete Luftfederkammer (26) hineinragen, in der sich die Luftfeder (25) befindet, wobei die beiden Ventilglieder (17a, 17b) bei Einnahme ihrer äußeren Schaltstellungen zweckmäßigerweise unterschiedlich weit in die Luftfederkammer (26) hineinragen.

5. Mehrwegeventil nach Anspruch 4, **dadurch gekennzeichnet, dass** in dem Ventilgehäuse (3) ein der Einspeisung von Druckluft dienender Speisekanal (27) ausgebildet ist, der in die Luftfederkammer (26) einmündet.

6. Mehrwegeventil nach einem der Ansprüche 1 bis 5, **dadurch gekennzeichnet, dass** jedes Ventilglied (17a, 17b) eine axial entgegengesetzt zum anderen Ventilglied (17b, 17a) orientierte Antriebsfläche (32a, 32b) aufweist, die durch die Vorsteuermittel (8) gesteuert mit einem Antriebsfluid beaufschlagbar ist.

7. Mehrwegeventil nach einem der Ansprüche 1 bis 6, **dadurch gekennzeichnet, dass** das Antriebsfluid von aus der Luftfederkammer (26) abgezweigter Druckluft gebildet ist.

8. Mehrwegeventil nach einem der Ansprüche 1 bis 7, **dadurch gekennzeichnet, dass** die beiden Ventilglieder (17a, 17b) an ihren einander zugewandten Endabschnitten (18a, 18b), insbesondere stirnseitig daran, eine dem jeweils anderen Ventilglied (17b, 17a) zugewandte Abstützfläche (22a, 22b) aufweisen, wobei sie mit diesen Abstützflächen (22a, 22b) aneinander anliegen, wenn eines der Ventilglieder (17a, 17b) die innere Schaltstellung einnimmt.

9. Mehrwegeventil nach einem der Ansprüche 1 bis 8, **dadurch gekennzeichnet, dass** jedes Ventilglied (17a, 17b) wahlweise in seiner äußeren oder in seiner inneren Schaltstellung positionierbar ist, während das jeweils andere Ventilglied (17b, 17a) hierbei konstant seine äußere Schaltstellung einnimmt.

10. Mehrwegeventil nach einem der Ansprüche 1 bis 9, **dadurch gekennzeichnet, dass** jede Ventileinheit (2a, 2b) eine 2/2-Ventilfunktionalität hat.

11. Mehrwegeventil nach einem der Ansprüche 1 bis 10, **dadurch gekennzeichnet, dass** durch die Ventilglieder (17a, 17b) drei Betriebsstellungen definierbar sind, in denen entweder beide Ventilglieder (17a, 17b) ihre äußere Schaltstellung einnehmen oder jeweils eines der Ventilglieder (17a, 17b) seine innere Schaltstellung einnimmt, während gleichzeitig das jeweils andere Ventilglied (17b, 17a) seine äußere Schaltstellung einnimmt, wobei zweckmäßigerweise jede Ventileinheit (2a, 2b) zwei durch das zugehörige Ventilglied (17a, 17b) wahlweise miteinander verbindbare oder voneinander abtrennbare Ventilkanäle (46a, 47a; 46b, 47b) aufweist und wobei das Mehrwegeventil zweckmäßigerweise insgesamt eine 3/3-Ventilfunktionalität aufweist, indem ein Ventilkanal (47a) der einen Ventileinheit (2a) zusammen mit einem Ventilkanal (47b) der anderen Ventileinheit (2b) zusammengeschlossen oder zu einem gemeinsamen Ventilanschluss (52) zusammengeführt ist, während die beiden anderen Ventilkanäle (46a, 46b) jeweils zu einem individuellen Ventilanschluss (48a, 48b) führen.

12. Verfahren zum Betreiben eines Mehrwegeventils, das über zwei jeweils ein bewegliches Ventilglied aufweisende Ventileinheiten (2a, 2b) verfügt, die ein gemeinsames Ventilgehäuse (3) mit einer die beiden Ventilglieder (17a, 17b) in axialer Aufeinanderfolge gemeinsam aufnehmenden und zwei einander entgegengesetzte äußere Endabschnitte aufweisenden Aufnahmebohrung (15) enthalten, wobei jedes Ventilglied (17a, 17b) durch axiale Umschaltbewegungen (23a, 23b) wahlweise in einer einem der äußeren Endabschnitte der Aufnahmebohrung (15) zugeordneten äußeren Schaltstellung oder in einer diesbezüglich axial weiter innen in der Aufnahmebohrung (15) liegenden inneren Schaltstellung positionierbar ist, wobei jedes Ventilglied (17a, 17b) in seinen beiden Schaltstellungen bezüglich des Ventilgehäuses (3) in einer axialen Richtung unbeweglich abgestützt ist, **dadurch gekennzeichnet, dass** die beiden Ventilglieder (17a, 17b) als Ventilgliedeinheit gemeinsam zwischen zwei Betriebsstellungen umgeschaltet werden, in denen das jeweils eine Ventilglied (17a, 17b) seine äußere Schaltstellung und gleichzeitig das jeweils andere Ventilglied (17b, 17a) seine innere Schaltstellung einnimmt, wobei das momentan aus seiner äußeren Schaltstellung in seine innere Schaltstellung umschaltende Ventilglied (17a, 17b) als das andere Ventilglied (17b, 17a) vor sich herschiebendes und schiebend antreibendes Schubglied genutzt wird und wobei die Umschaltbewegungen (23a, 23b) der Ventilglieder (17a, 17b) mittels elektrisch betätigbaren Vorsteuermitteln (8) durch gesteuerte Fluidbeaufschlagung mit einem Antriebsfluid hervorgerufen werden.

## Claims

1. Multiway valve with two valve units (2a, 2b), each having a movable valve member (17a, 17b) and containing a common valve casing (3) with a locating hole (15) accommodating the two valve members (17a, 17b) together in axial succession and with two opposite outer end sections, wherein each valve member (17a, 17b) may be positioned by means of axial changeover movements (23a, 23b) either in an outer switch position assigned to one of the outer end sections of the locating hole (15) or in an inner switch position axially further in the locating hole (15) with reference to the former position, wherein each valve member (17a, 17b) is supported immovably in its two switch positions in an axial direction relative to the valve casing (3), and wherein the two valve members (17a, 17b) are so matched to one another in terms of length that the inner switch position of each valve member (17a, 17b) is preset by direct support on the other valve member (17b, 17a) adopting its outer switch position, **characterised in that** the multiway valve (1) is of the electro-fluidic piloted type and is equipped with electrically actuable pilot means (8) which make possible, with a drive fluid, a controlled fluidic pressurisation serving to generate the changeover movements (23a, 23b), wherein the pilot means (8) have two electrically actuable pilot valves (12a, 12b), each assigned to one of the two valve units (2a, 2b) and in the form of 3/2-way valves, and wherein the two valve members (17a, 17b) may be changed over together as a valve member unit between two operating positions, in which the one respective valve member (17a, 17b) adopts its outer switch position and the other respective valve member (17b, 17a) adopts its inner switch position, wherein the valve member (17a, 17b) currently switching over from its outer switch position into its inner switch position forms a thrust member pushing and driving the other valve member (17b, 17a) ahead of it.

2. Multiway valve according to claim 1, **characterised in that** the two valve members (17a, 17b), at least during operation of the multiway valve, are biased constantly in the direction of their outer switch positions by spring means (24) effective between them, and each valve member (17a, 17b) may be switched over into the inner switch position, starting from its outer switch position and overcoming the spring force of the spring means (24).

3. Multiway valve according to claim 2, **characterised in that** the spring means (24) are realised in the form of an air spring (25) which consists of compressed air supplied from the two valve members (17a, 17b) directed axially away from one another.

4. Multiway valve according to claim 3, **characterised in that** the two valve members (17a, 17b) have facing inner end sections (18a, 18b), both extending irrespective of the switch position of the assigned valve member (17a, 17b) into an air spring chamber (26) formed by a section of the locating hole (15) in which the air spring (25) is to be found, wherein the two valve members (17a, 17b) extend expediently into the air spring chamber (26) for different distances on adopting their outer switch positions.

5. Multiway valve according to claim 4, **characterised in that** a feed passage (27) serving to supply compressed air is formed in the valve casing (3) and opens out into the air spring chamber (26).

6. Multiway valve according to any of claims 1 to 5, **characterised in that** each valve member (17a, 17b) has a drive surface (32a, 32b) axially opposite to the other valve member (17b, 17a) and which may be subjected to controlled pressurisation by the pilot means (8) using a drive fluid.

7. Multiway valve according to any of claims 1 to 6, **characterised in that** the drive fluid is formed by compressed air branched off from the air spring chamber (26).

8. Multiway valve according to any of claims 1 to 7, **characterised in that** the two valve members (17a, 17b) have on their facing end sections (18a, 18b), in particular on the end faces thereof, a support surface (22a, 22b) facing the respective other valve member (17b, 17a), wherein they are in contact via these support surfaces (22a, 22b) when one of the valve members (17a, 17b) adopts the inner switch position.

9. Multiway valve according to any of claims 1 to 8, **characterised in that** each valve member (17a, 17b) may be positioned in either its outer or its inner switch position, while the respective other valve member (17b, 17a) in this case is constantly in its outer switch position.

10. Multiway valve according to any of claims 1 to 9, **characterised in that** each valve unit (2a, 2b) has a 2/2 valve functionality.

11. Multiway valve according to any of claims 1 to 10, **characterised in that** three operating positions may be defined by the valve members (17a, 17b), in which either both valve members (17a, 17b) adopt their outer switch position or in each case one of the valve members (17a, 17b) adopts its inner switch position while at the same time the other respective valve member (17b, 17a) adopts its outer switch position, wherein expediently each valve unit (2a, 2b) has two valve passages (46a, 47a; 46b, 47b), optionally connectable to or separable from one another by the associated valve member (17a, 17b), and wherein the multiway valve expediently has altogether a 3/3 valve functionality, **in that** one valve passage (47a) of the one valve unit (2a) together with one valve passage (47b) of the other valve unit (2b) is combined or guided together to a common valve port (52), while the two other valve passages (46a, 46b) lead in each case to an individual valve port (48a, 48b).

12. Method of operating a multiway valve which has two valve units (2a, 2b), each having a movable valve member (17a, 17b) and containing a common valve casing (3) with a locating hole (15) accommodating the two valve members (17a, 17b) together in axial succession and with two opposite outer end sections, wherein each valve member (17a, 17b) may be positioned by means of axial changeover movements (23a, 23b) either in an outer switch position assigned to one of the outer end sections of the locating hole (15) or in an inner switch position axially further in the locating hole (15) with reference to the former position, wherein each valve member (17a, 17b) is supported immovably in its two switch positions in an axial direction relative to the valve casing (3), and wherein the two valve members (17a, 17b) may be changed over together as a valve member unit between two operating positions, in which the one respective valve member (17a, 17b) adopts its outer switch position and the other respective valve member (17b, 17a) simultaneously adopts its inner switch position, wherein the valve member (17a, 17b) currently switching over from its outer switch position into its inner switch position is used as thrust member pushing and driving the other valve member (17b, 17a) ahead of it, and wherein the changeover movements (23a, 23b) of the valve members (17a, 17b) are produced by electrically actuable pilot means (8) using controlled fluidic pressurisation with a drive fluid.

## Revendications

1. Soupape à voies multiples, comprenant deux unités de soupape (2a, 2b) présentant respectivement un organe de soupape (17a, 17b) mobile, lesquelles unités de soupape comportent un boîtier de soupape (3) commun doté d'un alésage de réception (15) recevant conjointement les deux organes de soupape (17a, 17b) selon un ordre axial et présentant deux sections d'extrémité extérieures opposées l'une à l'autre, chaque organe de soupape (17a, 17b) pouvant être positionné au choix par des mouvements de commutation (23a, 23b) axiaux dans une position de commutation extérieure, associée à l'une des sections d'extrémité extérieures de l'alésage de réception (15) ou dans une position de commutation intérieure se trouvant dans l'alésage de réception (15) davantage à l'intérieur axialement par rapport à la position de commutation extérieure, chaque organe de soupape (17a, 17b) s'appuyant de manière immobile dans une direction axiale dans ses deux positions de commutation par rapport au boîtier de soupape (3), et les deux organes de soupape (17a, 17b) étant adaptés l'un à l'autre en termes de longueur de telle manière que la position de commutation intérieure de chaque organe de soupape (17a, 17b) est prédéfinie par l'appui direct contre l'autre organe de soupape (17b, 17a) prenant sa position de commutation extérieure, **caractérisée en ce que** la soupape à plusieurs voies (1) est une soupape pilote électrofluidique et est équipée de moyens pilotes (8) pouvant être actionnés électriquement, lesquels permettent de soumettre de manière commandée chaque organe de soupape (17a, 17b) à l'action d'un fluide d'entraînement servant à entraîner les mouvements de commutation (23a, 23b), les moyens pilotes (8) disposant de soupapes pilotes (12a, 12b) associées respectivement à une des deux unités de soupape (2a, 2b) et réalisées sous la forme de distributeurs à 3/2 voies, pouvant être actionnées électriquement et les deux organes de soupape (17a, 17b) pouvant être commutés conjointement en tant qu'unité d'organe de soupape entre deux positions de fonctionnement, dans lesquelles l'un des organes de soupape (17a, 17b) prend sa position de commutation extérieure et l'autre organe de soupape (17b, 17a) prend sa position de commutation intérieure, l'organe de soupape (17a, 17b) commutant à ce moment depuis sa position de commutation extérieure dans sa position de commutation intérieure constituant un organe de poussée poussant devant lui l'autre organe de soupape (17b, 17a) et entraînant ce dernier par glissement.

2. Soupape à voies multiples selon la revendication 1, **caractérisée en ce que** les deux organes de soupape (17a, 17b) sont précontraints, au moins lors du fonctionnement de la soupape à voies multiples, par des moyens formant ressort (24) actifs entre ces derniers constamment en direction de leurs positions de commutation extérieures, et **en ce que** chaque organe de soupape (17a, 17b) peut être commuté dans la position de commutation intérieure en partant de sa position de commutation extérieure en surmontant la force élastique des moyens formant ressort (24).

3. Soupape à voies multiples selon la revendication 2, **caractérisée en ce que** les moyens formant ressort (24) sont réalisés sous la forme d'un ressort pneumatique (25), qui est constitué d'air comprimé exerçant une action sur les deux organes de soupape (17a, 17b) de manière orientée axialement de façon à les éloigner l'un de l'autre.

4. Soupape à voies multiples selon la revendication 3, **caractérisée en ce que** les deux organes de soupape (17a, 17b) disposent de sections d'extrémité (18a, 18b) intérieures tournées les unes vers les autres, lesquelles dépassent à l'intérieur d'un compartiment de ressort pneumatique (26) formé par une section de l'alésage de réception (15), indépendamment de la position de commutation de l'organe de soupape (17a, 17b) associé, dans lequel compartiment se trouve le ressort pneumatique (25), les deux organes de soupape (17a, 17b) dépassant à l'intérieur du compartiment de ressort pneumatique (26) sur une longueur différente de manière appropriée, lorsqu'ils prennent leurs positions de commutation extérieures.

5. Soupape à voies multiples selon la revendication 4, **caractérisée en ce qu'**est réalisé dans le boîtier de soupape (3) un conduit d'alimentation (27) servant à l'alimentation en air comprimé, lequel débouche dans le compartiment de ressort pneumatique (26).

6. Soupape à voies multiples selon l'une quelconque des revendications 1 à 5, **caractérisée en ce que** chaque organe de soupape (17a, 17b) présente une surface d'entraînement (32a, 32b) orientée de manière opposée axialement à l'autre organe de soupape (17b, 17a), laquelle surface d'entraînement peut être soumise à l'action d'un fluide d'entraînement de manière commandée par les moyens pilotes (8).

7. Soupape à voies multiples selon l'une quelconque des revendications 1 à 6, **caractérisée en ce que** le fluide d'entraînement est formé par l'air comprimé dévié du compartiment de ressort pneumatique (26).

8. Soupape à voies multiples selon l'une quelconque des revendications 1 à 7, **caractérisée en ce que** les deux organes de soupape (17a, 17b) présentent au niveau de leurs sections d'extrémité (18a, 18b) tournées les unes vers les autres, en particulier côté frontal au niveau de ces dernières, une surface d'appui (22a, 22b) tournée vers l'autre organe de soupape (17b, 17a) respectivement, les organes de soupape reposant l'un contre l'autre par lesdites surfaces d'appui (22a, 22b) lorsqu'un des organes de soupape (17a, 17b) prend la position de commutation intérieure.

9. Soupape à voies multiples selon l'une quelconque des revendications 1 à 8, **caractérisée en ce que** chaque organe de soupape (17a, 17b) peut être positionné au choix dans sa position de commutation extérieure ou dans sa position de commutation intérieure, tandis que l'autre organe de soupape respectif (17b, 17a) prend dans le cas présent de manière constante sa position de commutation extérieure.

10. Soupape à voies multiples selon l'une quelconque des revendications 1 à 9, **caractérisée en ce que** chaque unité de soupape (2a, 2b) présente une fonctionnalité de soupape bidirectionnelle.

11. Soupape à voies multiples selon l'une quelconque des revendications 1 à 10, **caractérisée en ce que** les organes de soupape (17a, 17b) permettent de définir trois positions de fonctionnement, dans lesquelles soit deux organes de soupape (17a, 17b) prennent leur position de commutation extérieure soit respectivement un des organes de soupape (17a, 17b) prend sa position de commutation intérieure, tandis qu'en même temps l'autre organe de soupape respectif (17b, 17a) prend sa position de commutation extérieure, chaque unité de soupape (2a, 2b) présentant de manière appropriée deux conduits de soupape (46a, 47a ; 46b, 47b) pouvant au choix être reliés l'un à l'autre ou être séparés l'un de l'autre, et la soupape à voies multiples présentant de manière appropriée au total une fonctionnalité de soupape 3/3, **en ce qu'**un conduit de soupape (47a) de l'une des unités de soupape (2a) est réuni à un conduit de soupape (47b) de l'autre unité de soupapes (2b) ou est assemblé à ce dernier pour former un raccord de soupape (52) commun, tandis que les deux autres conduits de soupape (46a, 46b) mènent respectivement à un raccord de soupape (48a, 48b) individuel.

12. Procédé servant à faire fonctionner une soupape à voies multiples, qui dispose de deux unités de soupape (2a, 2b) présentant respectivement un organe de soupape mobile, lesquelles comportent un boîtier de soupape (3) commun doté d'un alésage de réception (15) recevant conjointement les deux organes de soupape (17a, 17b) selon un ordre axial et présentant deux sections d'extrémité extérieures opposées l'une à l'autre, chaque organe de soupape (17a, 17b) pouvant être positionné par des mouvements de commutation (23a, 23b) axiaux au choix dans une position de commutation extérieure associée à une des sections d'extrémité extérieures de l'alésage de réception (15) ou dans une position de commutation intérieure se trouvant dans l'alésage de réception (15) davantage à l'intérieur axialement par rapport à la position de commutation extérieure, chaque organe de soupape (17a, 17b) s'appuyant de manière immobile dans leurs deux positions de commutation par rapport au boîtier de soupape (3) dans une direction axiale, **caractérisé en ce que** les deux organes de soupape (17a, 17b) sont commutés sous la forme d'une unité d'organe de soupape conjointement entre deux positions de fonctionnement, dans lesquelles l'un des organes de soupape respectifs (17a, 17b) prend sa position de commutation extérieure et l'autre organe de soupape respectif (17b, 17a) prend en même temps sa position de commutation intérieure, l'organe de soupape (17a, 17b) commutant sur le moment depuis sa position de commutation extérieure dans sa position de commutation intérieure étant utilisé comme un organe de poussée poussant devant lui l'autre organe de soupape (17b, 17a) et entraînant ce dernier par glissement, et les mouvements de commutation (23a, 23b) des organes de soupape (17a, 17b) étant provoqués au moyen de moyens pilotes (8) pouvant être actionnés électriquement par l'action commandée d'un fluide d'entraînement.
